# FASCICULE DE BREVET EUROPEEN

(11) **EP 1 037 479 B1**
(45) Date de publication et mention de la délivrance du brevet: **11.10.2006**
(21) Numéro de dépôt: 00400629.2
(22) Date de dépôt: 08.03.2000
(51) Int. Cl.: H04Q 7/30

(54) **Base de réseau radiotéléphonique local reliée à un réseau de radiotéléphonie cellulaire**
Basisstation eines lokalen Mobilfunknetzes verbunden mit einem zellularen Mobilfunknetz
Radiotelephone base station of local netwok connected to a cellular radio network

(30) Priorité: 10.03.1999 FR 9902945
(43) Date de publication de la demande: 20.09.2000
(73) Titulaire: SAGEM Communication, 75015 Paris (FR)
(72) Inventeur: Buton, André, 95520 Osny (FR)
(74) Mandataire: Bloch, Gérard

(56) Documents cités:
- EP-A- 0 849 965
- DE-A- 2 937 018
- US-A- 5 349 694

## Description

Un réseau téléphonique local comporte une base à travers laquelle une pluralité de terminaux téléphoniques peuvent accéder au réseau téléphonique commuté.

Il est avantageux que la base soit reliée par radio aux terminaux, qui sont donc portables. Cependant, le porteur d'un tel terminal ne peut l'utiliser que dans la zone de couverture radio de la base. Comme cette zone est limitée, pour éviter des parasitages entre réseaux locaux, le réseau local perd toute utilité dès qu'on en sort. Il faut alors utiliser un poste téléphonique classique ou un combiné d'un réseau téléphonique cellulaire (EP 849965, EP 830042, US 5 675 629).

Cela entraîne à la fois un surcoût et un encombrement pour le porteur.

La présente invention vise à éviter ces inconvénients.

A cet effet, l'invention concerne une base de réseau téléphonique local selon les revendications, comportant des moyens radio de communication locale avec des terminaux téléphoniques et des moyens de liaison avec un réseau téléphonique externe.

Ainsi, les terminaux du réseau local deviennent des combinés du réseau cellulaire. Leurs porteurs peuvent donc les utiliser pour une communication locale mais aussi pour une communication de téléphonie cellulaire. Le réseau local peut en outre être déplacé selon les besoins.

Avantageusement, la fréquence de communication locale étant sensiblement le double de la fréquence des moyens de liaison avec le réseau téléphonique externe, la fréquence des moyens radio de communication locale est générée à partir d'une fréquence différente de la fréquence des moyens radio des moyens de liaison avec le réseau téléphonique externe.

On évite ainsi un parasitage de ces derniers par des circuits qui fonctionneraient à la fréquence de ceux-ci.

L'invention sera mieux comprise à l'aide de la description suivante d'une forme de réalisation préférée, et d'une variante, de la base de réseau téléphonique radio local de l'invention, en référence au dessin annexé, sur lequel :

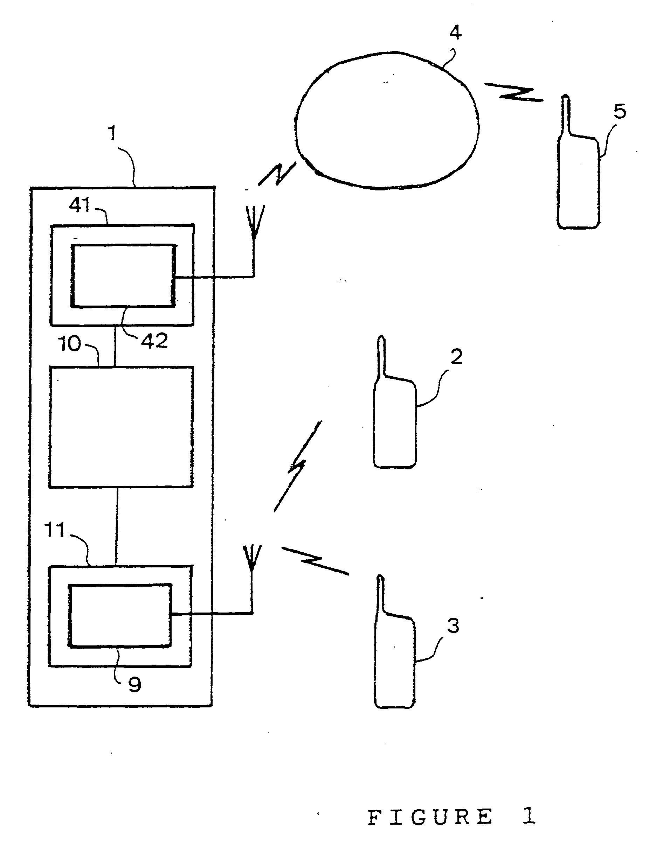

- la figure 1 est un schéma par blocs fonctionnels représentant le réseau téléphonique radio local de l'invention et un réseau de téléphonie cellulaire;
- la figure 2 est un schéma détaillé des circuits d'une base du réseau local;
- la figure 3 représente deux gammes de fréquences, locale et externe, et
- la figure 4 représente deux gammes de fréquences, locale et externe, dans le cas de la variante.

Le réseau téléphonique radio local représenté comprend une base 1 comportant un ensemble 11 de circuits de communication locale avec des terminaux téléphoniques 2, 3, ici des postes téléphoniques portables. L'ensemble 11 comporte des circuits radio 9 de liaison avec des circuits homologues des terminaux 2, 3, tous ici à la norme DECT. La base 1 comporte en outre un ensemble 41 de circuits de liaison avec un réseau externe de téléphonie, ensemble 41 qui comporte des circuits radio 42 de liaison avec ici le réseau de radiotéléphonie cellulaire GSM, référencé 4, auquel appartient un combiné téléphonique radio 5. Une unité centrale à microprocesseur 10, comportant des circuits d'horloge, est reliée aux divers circuits pour les gérer.

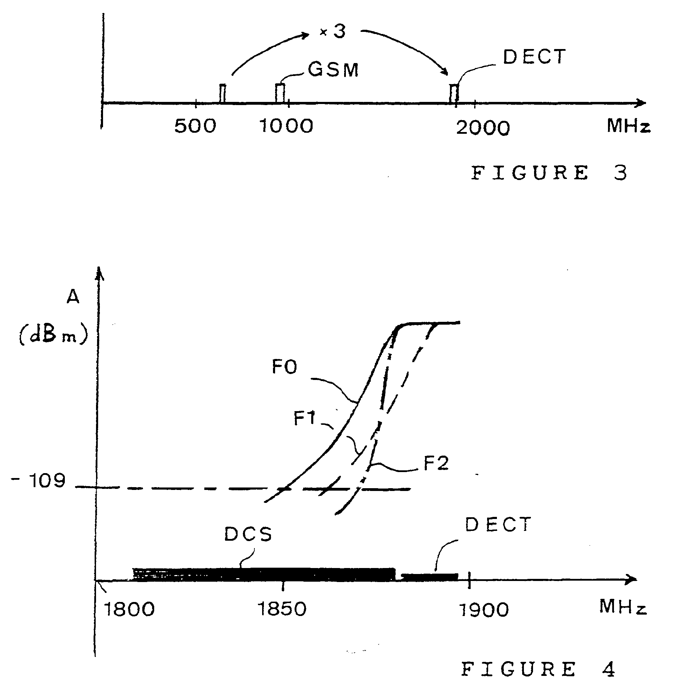

La fréquence de communication locale, DECT, est dans la gamme s'étendant de 1881 à 1897 MHz (fig. 3) et se trouve être sensiblement le double de la fréquence des circuits radio 42 de liaison avec le réseau GSM 4, accordés dans une gamme s'étendant de 935 à 960 MHz.

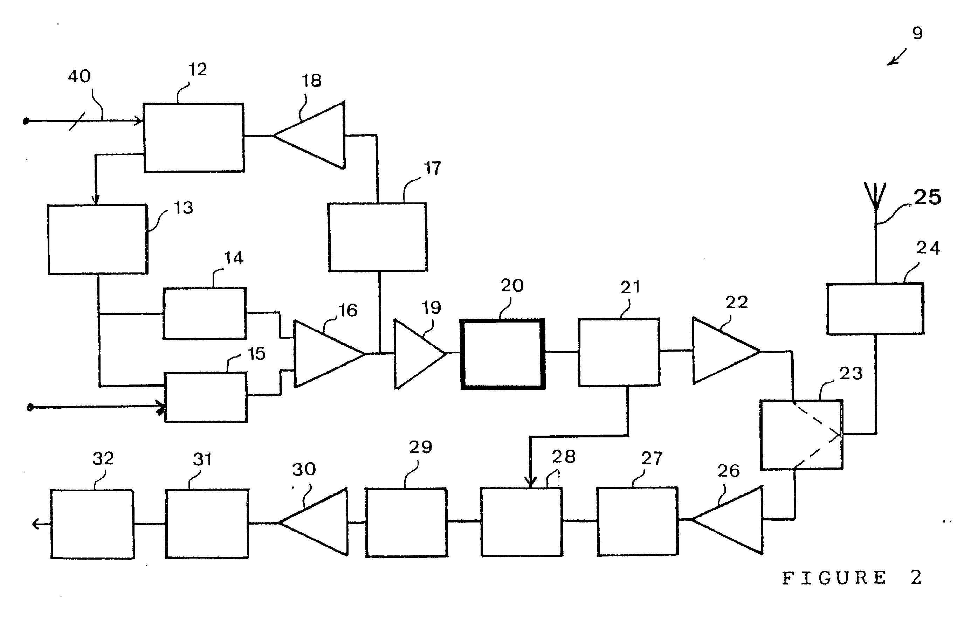

La fréquence des circuits radio 9 de communication locale est générée par un synthétiseur de fréquence 12-18 (fig. 2) à plus basse fréquence, commandant un multiplieur élévateur de fréquence 20. Les deux circuits 12-18 et 20 ci-dessus sont plus faciles à réaliser qu'un seul oscillateur qui serait à la fréquence visée.

Comme le synthétiseur réalisé 12-18 comporte des éléments formant antenne, il émet un signal parasite sur sa fréquence. De plus, les circuits en aval n'éliminent pas totalement, même après multiplication de fréquence (20) la composante à fréquence d'origine des circuits du synthétiseur 12-18. Les circuits radio 9 et 42 étant physiquement relativement proches, on évite que les circuits radio GSM 42, à haute sensibilité de réception dans leur gamme de fréquences GSM, reçoivent et détectent les émissions parasites du synthétiseur 12-18. En effet, une communication peut être établie entre un ou plusieurs terminaux 2, 3 et un terminal comme celui référencé 5 du réseau cellulaire 4. Il s'agit donc d'assurer une compatibilité électromagnétique entre les circuits radio des circuits 9 et 42 qui doivent pouvoir fonctionner simultanément.

Pour cela, le synthétiseur 12-18 est accordé sur une fréquence différente de la fréquence, ou gamme de fréquences 935 - 960 MHz, des circuits radio 42 des circuits de liaison 41. En d'autres termes, le multiplieur de fréquence en sortie du synthétiseur 12-18 a un rapport de multiplication différent de 2, avec une marge déterminée.

La figure 2 représente en détail les circuits radio de communication locale 9.

Un circuit oscillateur 12 du type PLL (boucle à verrouillage de phase) relié à un bus 40 de commande, est monté dans une boucle d'asservissement 13-18 et commande le multiplieur de fréquence 20 fournissant la porteuse radio émission et réception de la trame temporelle du réseau local DECT.

Le synthétiseur 12-18 comporte, à partir de la sortie de l'oscillateur 12, un filtre 13 passe-bas qui alimente en parallèle deux circuits oscillateurs 14 et 15 du type VCO, donc à commande par une tension, qui commandent chacun un amplificateur 16 de sortie de la boucle. L'oscillateur 15 est commandé par une entrée de modulation d'une voie d'émission de données à émettre localement par radio. L'amplificateur 16 commande un circuit prédiviseur de fréquence 17 commandant un amplificateur 18 qui asservit le circuit à verrouillage de phase 12.

La sortie de l'amplificateur 16 commande aussi, à travers un amplificateur tampon 19, le multiplieur élévateur de fréquence 20, ici un tripleur, dont le signal qu'il engendre est transmis à l'antenne 25 du réseau local de la base 1 à travers un coupleur-dérivateur 21, un amplificateur d'émission 22, un aiguilleur 23 d'émission-réception et un filtre passe-bande d'antenne 24. Le filtre 24 est commun à la voie d'émission et à la voie de réception ci-dessous. Le tripleur de fréquence 20 reçoit donc un signal (le plus à gauche sur la fig. 3) dans la gamme 1881/3 - 1897/3, soit 627 - 632 environ MHz, donc hors de la gamme GSM.

En réception, les signaux de l'antenne 25 traversent le filtre 24 et sortent de l'aiguilleur 23 par une voie spécifique reliée à un amplificateur à faible bruit 26 suivi d'un filtre passe-bas 27 qui alimente un mélangeur 28 de transposition de fréquence alimenté par ailleurs par le signal dérivé du coupleur 21. La sortie du mélangeur 28, basse fréquence, traverse un filtre passe-bas 29 puis un limiteur d'amplitude 30, de contrôle automatique de volume. Le limiteur 30 alimente en signal un démodulateur 31 qui est suivi d'un circuit d'échantillonnage et de maintien 32 fournissant à la base 1 les données numériques en bande de base de la trame DECT, provenant des terminaux 2, 3.

En sens inverse, les données à émettre localement par radio modulent l'état du circuit oscillateur 15 et commandent ainsi la fréquence du signal issu du tripleur 20. Le bus 40 permet de choisir une porteuse parmi plusieurs dans la gamme DECT.

Par rapport à un schéma classique, dans lequel on filtre uniquement en réception DECT, le filtre 24 passe-bande sert aussi en émission DECT. Il filtre les émissions parasites susceptibles de provenir du synthétiseur 12-18 qui, bien qu'accordé en dehors de la gamme GSM, pourrait cependant présenter une émission parasite dans une large bande de fréquences qui, après multiplication (20), recouvrirait la gamme GSM. Ce serait en particulier le cas si le synthétiseur 12-18 fonctionnait sensiblement à une fréquence sous-multiple entier de la gamme GSM, par exemple autour de 950/2 ou 950/3 MHz. Les premiers harmoniques ou partiels de cette fréquence correspondraient alors à la gamme de fréquences GSM.

Dans la variante de réalisation de la figure 4, où l'ordonnée A représente le niveau de signal radio en dBm, le réseau GSM 4 et les circuits de liaison 41 correspondants de la base 1 sont remplacés par le réseau de radiotéléphonie cellulaire DCS et des circuits de liaison accordés en correspondance. La porteuse d'émission DCS est choisie dans un canal parmi plusieurs dans la gamme 1710-1785 MHz et celle de réception, représentée, dans un canal parmi plusieurs de la gamme 1805-1880 MHz. La gamme d'émission et réception DECT s'étendant de 1881 à 1897 MHz, il n'y a donc que 1 MHz d'écart entre le haut de la gamme de réception DCS et le bas de la gamme DECT, qui comporte dix canaux à diverses fréquences réparties dans la gamme. Les deux gammes sont donc voisines.

La courbe F0 représente le niveau du spectre d'émission DECT, qui déborde sur la gamme DCS. Afin d'éviter une perturbation en réception cellulaire DCS dans la base 1, le seuil de sensibilité des circuits 42 étant relativement bas, à -109 dBm, l'unité centrale 10 n'attribue, pour les communications locales DECT à établir, que les canaux de rang supérieur, c'est-à-dire inhibe les canaux dont la fréquence est située dans la portion latérale de la gamme DECT située du côté de la gamme DCS, par exemple la portion de fréquences inférieures à 1890 MHz. La courbe F1 correspond à une translation en fréquence de la courbe F0, représentant le nouveau spectre, plus étroit, d'émission DECT, à limite inférieure de fréquence décalée vers les hautes fréquences, après mise hors service par inhibition des canaux en bas de bande DECT, précisément ceux dont la distance en fréquence à la gamme DCS est inférieure à une valeur de seuil minimal déterminée, ici 10 MHz. On réduit ainsi de 9 MHz, par commande logique de gestion des canaux, la largeur effective du spectre d'émission DECT et abaisse ainsi le niveau de bande latérale parasite que reçoivent les canaux hauts de la gamme DCS. La perte partielle des canaux DECT est en pratique sans influence sur le volume de trafic local possible puisqu'un seul canal DECT peut acheminer jusqu'à six communications. Dans cet exemple, la figure 4 montre que la limite haute de la partie utile de la gamme DCS passe ainsi de 1850 à 1860 MHz, c'est-à-dire que le débordement du spectre DECT sur la gamme DCS ne peut être totalement évité. On prévoit alors ici de neutraliser ou inhiber les canaux aux fréquences les plus hautes (> 1860 MHz) de la gamme DCS, proches de la gamme DECT.

Ainsi, les circuits radio de communication locale 9 étant accordés sur des canaux d'une gamme de fréquences voisine d'une gamme de fréquences de canaux des circuits radio 42 de liaison cellulaire, l'unité centrale 10 de gestion des canaux inhibe, dans au moins une des gammes, les canaux dont la distance en fréquence à l'autre gamme est inférieure à une valeur déterminée, la valeur déterminée dépendant de la forme du spectre d'émission des circuits radio DECT 9 et du niveau d'émission, ainsi que du niveau de sensibilité des circuits radio 42.

Une autre solution, alternative ou complémentaire, pour protéger la réception cellulaire DCS dans la base 1 contre les émissions DECT, consiste à effectuer un filtrage passe-haut ou passe-bande des émissions DECT des circuits 9 par un filtre du genre du filtre d'antenne 24 pour raidir le flanc inférieur du spectre DECT. Les circuits radio de communication locale 9 comportent un filtre séparateur de gammes, de sélectivité en fréquence déterminée, et l'unité centrale 10 de gestion des canaux est agencée pour inhiber un nombre de canaux, des circuits radio 42 de liaison cellulaire, fonction de la sélectivité du filtre.

Comme un filtre séparateur de gammes de fréquence ne peut présenter une courbe de réponse à raideur infinie, la réalisation d'un filtre séparateur des gammes telles que définies serait coûteuse, compte tenu de la raideur de la courbe de réponse nécessaire du fait du faible écart, de 1 MHz, séparant les deux gammes DCS et DECT. On préfère donc réaliser un filtre d'émission DECT passe-haut ou passe-bande, dont la courbe de réponse F2 en bande coupée présente une raideur limitée pour fournir la réjection voulue des parasites sur un écart de fréquence atteignant 10 MHz environ à partir du 1881 MHz de bas de gamme DECT. En pareil cas, l'unité centrale 10 neutralise environ 10 MHz dans l'une ou les deux gammes DECT et DCS, ce qui correspond à la sélectivité du filtre, pour atténuer, à un niveau inférieur à -109 dBm, le niveau de parasite d'une porteuse d'émission DECT à 1881 MHz.

Par exemple, la limite haute de la gamme DCS peut être ramenée à 1870 MHz au lieu de 1880 MHz, la gamme DECT étant alors inchangée ou très peu réduite en partie basse. Une telle solution, de limitation de la gamme DCS, présente l'intérêt d'offrir jusqu'à 10 MHz de bande interdite entre les deux gammes, donc de permettre d'utiliser un filtre simple, sans réduire excessivement la gamme DCS relativement large, ce qui ne serait pas le cas de la gamme DECT. Un filtre encore plus simple, séparant de 40 MHz les deux gammes, serait encore envisageable, avec par exemple une gamme DCS limitée à un maximum de 1850 MHz et une gamme DECT limitée à un minimum de 1890 MHz. Le nombre de canaux inhibés est donc fonction de la sélectivité du filtre.

## Revendications

1. Base de réseau téléphonique local, comportant des moyens radio (9) de communication locale avec des terminaux téléphoniques (2, 3) et des moyens (41) de liaison avec un réseau téléphonique externe (4), comporte des moyens radio (42) pour relier la base à un réseau de radiotéléphonie cellulaire (4), les moyens radio (9) de communication locale et les moyens de liaison (41) avec leurs moyens radio (42) étant reliés à une unité centrale (10) destinée à les gérer, la fréquence de communication locale étant sensiblement le double de la fréquence des moyens radio (42) des moyens de liaison (41) avec le réseau téléphonique externe (4) et **caractérisée par le fait que** la fréquence des moyens radio de communication locale (9) est générée à partir d'une fréquence (12-18) différente de la fréquence desdits moyens radio (42) des moyens de liaison (41).

2. Base selon la revendication 1, dans laquelle les moyens radio de communication locale (9) comportent un filtre d'antenne (24) commun à une voie d'émission (22) et à une voie de réception (26).

3. Base de réseau téléphonique local, comportant des moyens radio (9) de communication locale avec des terminaux téléphoniques (2, 3) et des moyens (41) de liaison avec un réseau téléphonique externe (4), comportant des moyens radio (42) pour relier la base à un réseau de radiotéléphonie cellulaire (4), les moyens radio (9) de communication locale et les moyens de liaison (41) avec leurs moyens radio (42) étant reliés à une unité centrale (10) destinée à les gérer, les moyens radio de communication locale (9) étant accordés sur des canaux d'une gamme de fréquences voisine d'une gamme de fréquences de canaux des moyens radio (42) de liaison cellulaire et **caractérisée par le fait que** l'unité centrale (10) assure la gestion des canaux pour inhiber, dans au moins une des gammes, les canaux dont la distance en fréquence à l'autre gamme est inférieure à une valeur déterminée.

4. Base selon la revendication 3, dans laquelle les moyens radio de communication locale (9) comportent un filtre séparateur de gammes, de sélectivité en fréquence déterminée, et les moyens de gestion des canaux (10) sont agencés pour inhiber un nombre de canaux, des moyens radio (42) de liaison cellulaire, fonction de la sélectivité du filtre.

## Claims

1. Local telephone network base which includes radio means (9) of local communication with telephone terminals (2,3) and a means (41) of connection with an external telephone network (4) which includes radio means (42) for connecting the base to a cellular radiotelephone network (4), the radio means (9) of local communication and the connection means (41), with its radio means (42), being linked to a central unit (10) designed to manage them, the local communication frequency being approximately double the frequency of the radio means (42) of the connection means (41) with the external telephone network (4) and **characterised by** the fact that the frequency of the radio means (9) of local communication is generated using a frequency (12-18) which is different to the frequency of the said radio means (42) of the connection means (41).

2. Base as described in claim 1, in which the radio means (9) of local communication include an antenna filter (24) common to a transmission channel (22) and a reception channel (26).

3. Local telephone network base, which includes a radio means (9) of local communication with telephone terminals (2,3) and a means (41) of connection with an external telephone network (4) which includes radio means (42) for connecting the base to a cellular radiotelephone network (4), the radio means (9) of local communication and the connection means (41), with its radio means (42), being linked to a central unit (10) designed to manage them, with the radio means (9) of local communication being tuned to channels in a range of frequencies which is close to a range of channel frequencies for the radio means (42) for cellular connection and **characterised by** the fact that the central unit (10) manages the channels so as to inhibit, in at least one of the ranges, the channels whose frequency difference from the other range is less than a given value.

4. Base as described in claim 3, in which the radio means (9) of local communication includes a filter for separating ranges, of given frequency selectivity, and the channel managing means (10) are arranged to inhibit a number of channels of the radio means (42) for cellular connection (42), depending on the selectivity of the filter.

## Patentansprüche

1. Basisstation für ein lokales Telefonnetz, mit Funkeinrichtungen (9) für die lokale Kommunikation mit Fernsprechendgeräten (2, 3) und Einrichtungen (41) für die Verbindung mit einem externen Telefonnetz (4), welche Funkeinrichtungen (42) zum Verbinden der Basisstation mit einem zellulären Funktelefonnetz (4) aufweisen, wobei die Funkeinrichtungen (9) für die lokale Kommunikation und die Verbindungseinrichtungen (41) mit ihren Funkeinrichtungen (42) mit einer Zentraleinheit (10) verbunden sind, die dazu bestimmt ist, diese zu steuern, und die Frequenz für die lokale Kommunikation im wesentlichen die zweifache Frequenz der Funkeinrichtungen (42) der Einrichtungen (41) für die Verbindung mit dem externen Telefonnetz (4) ist,
**dadurch gekennzeichnet,**
**dass** die Frequenz der Funkeinrichtungen (9) für die lokale Kommunikation ausgehend von einer Frequenz (12-18) erzeugt wird, die von der Frequenz der Funkeinrichtungen (42) der Verbindungseinrichtungen (41) verschieden ist.

2. Basisstation nach Anspruch 1, bei der die Funkeinrichtungen (9) für die lokale Kommunikation eine Antennenweiche (24) aufweisen, die einem Sendepfad (22) und einem Empfangspfad (26) gemeinsam ist.

3. Basisstation für ein lokales Telefonnetz, mit Funkeinrichtungen (9) für die lokale Kommunikation mit Fernsprechendgeräten (2, 3) und Einrichtungen (41) für die Verbindung mit einem externen Telefonnetz (4), welche Funkeinrichtungen (42) zum Verbinden der Basisstation mit einem zellulären Funktelefonnetz (4) aufweisen, wobei die Funkeinrichtungen (9) für die lokale Kommunikation und die Verbindungseinrichtungen (41) mit ihren Funkeinrichtungen (42) mit einer Zentraleinheit (10) verbunden sind, die dazu bestimmt ist, diese zu steuern, und die Funkeinrichtungen (9) für die lokale Kommunikation auf Kanäle eines Frequenzbereichs eingestellt sind, der zu einem Frequenzbereich von Kanälen der Funkeinrichtungen (42) für die zelluläre Verbindung benachbart ist,
**dadurch gekennzeichnet,**
**dass** die Zentraleinheit (10) die Steuerung der Kanäle durchführt, um in mindestens einem der Bereiche diejenigen Kanäle zu blockieren, deren Frequenzabstand zu dem anderen Bereich geringer als ein vorgegebener Wert ist.

4. Basisstation nach Anspruch 3, bei der die Funkeinrichtungen (9) für die lokale Kommunikation ein Bereichstrennfilter mit einer bestimmten Frequenzselektivität aufweisen, und die Einrichtungen (10) zum Steuern der Kanäle dazu ausgelegt sind, eine Anzahl von Kanälen der Funkeinrichtungen (42) für die zelluläre Verbindung in Abhängigkeit von der Selektivität des Filters zu blockieren.
